Europäisches Patentamt

European Patent Office

Office européen des brevets

(19)

(11)   EP 0 657 749 B1

## (12)   EUROPEAN PATENT SPECIFICATION

(45) Date of publication and mention
of the grant of the patent:
**19.03.1997   Bulletin 1997/12**

(51) Int Cl.$^6$:  **G01T 1/29**

(21) Application number: **93203474.7**

(22) Date of filing: **10.12.1993**

(54) **Apparatus for reading out radiation obtained by photostimulation**

Vorrichtung zum Auslesen von Strahlungsbildern durch Photostimulierung

Appareil pour la reproduction d'image de rayonnement par photostimulation

(84) Designated Contracting States:
**BE DE FR GB NL**

(43) Date of publication of application:
**14.06.1995   Bulletin 1995/24**

(73) Proprietor: **AGFA-GEVAERT
naamloze vennootschap
B-2640 Mortsel (BE)**

(72) Inventors:
- **van den Bogaert, Jan c/o Agfa-Gevaert N.V.,
  B-2640 Mortsel (BE)**
- **Struye, Luc c/o Agfa-Gevaert N.V.,DIE 3800
  B-2640 Mortsel (BE)**

(56) References cited:
EP-A- 0 210 505          EP-A- 0 296 365
EP-A- 0 451 913          EP-A- 0 559 118
US-A- 4 882 488

## Description

### 1. Field of the Invention

The present invention relates to an apparatus suited for use in photostimulation and reading out of image information stemming from penetrating radiation in a photostimulable phosphor material, and to a scanner comprising said apparatus.

### 2. Background of the Invention

In radiography the interior of objects is reproduced by means of penetrating radiation, which is high energy radiation known as ionizing radiation belonging to the class of X-rays, gamma-rays and high energy elementary particle radiation, e.g. beta-rays, electron beam radiation or neutron radiation. The receptor element for said radiation is normally a phosphor plate, panel or sheet in which the phosphor converts the energy of the absorbed penetrating radiation into fluorescent light.

In US-P 3,859,527 an X-ray recording system is described wherein photostimulable phosphors are used having in addition to their immediate fluorescent light emission (prompt emission) on X-ray irradiation the property to store temporarily a large part of the X-ray energy. Said energy is set free by photostimulation in the form of fluorescent light different in wavelength from the light used in the photostimulation. In said X-ray recording system the light emitted on photostimulation is detected photoelectronically and transformed into sequential electrical signals.

The basic constituents of such X-ray recording system operating with a photostimulable storage phosphor are :

(1) an imaging sensor containing said phosphor in particulate form normally in a plate or panel, which temporarily stores some energy of the absorbed X-ray energy pattern,
(2) a laser beam for scanningwise photostimulation,
(3) a photoelectronic light detector providing analog signals that are converted into digital time-series signals,
(4) optionally a digital image processor,
(5) an electrical signal recorder, e.g. magnetic disk or tape, and
(6) an image display unit operating with the obtained electrical signals, e.g. cathode-ray tube, or a photosensitive image recording material being signalwise exposed to light, e.g. a photographic silver halide emulsion film material yielding a hard copy of the recorded X-ray image.

Different devices for reading light patterns in a scanningwise fashion have been described e.g. in US-P 4,258,264, 4,346,295, 4,800,276 and published European patent applications (EP-A) 0 123 263, 0 144 089 and 0 559 118.

The lastmentioned EP-A 0 559 118 relates to an optical fiber cable for scanning a storage phosphor plate, said optical fiber cable comprising:

a bifurcated bundle of optical fibers having distal and proximal ends, said optical fiber cable further comprising at least one emitter fiber and at least one collecting fiber;
a graded index (GRIN) type coupling lens joined to the proximal end of said at least one emitter fiber;
a focusing/imaging lens joined to the distal ends of said at least one emitter fiber and at least one collecting fiber.

An illustrative embodiment of said EP-A (see column 4) represents a bifurcated optical fiber bundle containing a single emitter fiber surrounded by a plurality of collecting fibers at the distal end. For scanning a storage phosphor imaging plate said optical fiber bundle is secured to a scanning mechanism.

Storage phosphor-binder layers can resolve features in the original object to be radiographed as small as one tenth of a millimeter. Storage phosphors do not emit instantaneously their photostimulated fluorescent light. So, when the exposure to photostimulating light is ceased the intensity of the emitted fluorescent light does not immediately decrease to zero.

As described e.g. in European patent specification (EP-A) 0 345 903 a common $BaFBr:Eu^{2+}$ storage phosphor (see comparative example 1) has a "response time" of 0.6 $\mu s$, and according to US-P 5,140,163 an $Eu^{2+}$ doped $Ba_5SiO_4Br_6$ phosphor (see example 1) has a response time of 0.53 $\mu s$. By said "response time" is meant the photostimulation time to reach half of the maximum intensity of emitted fluorescent light in a non-moving photostimulated spot of the phosphor-containing layer.

In US-P 4,800,276 the decay of the light intensity of the stimulated light emission (after-glow) is defined by the time required for the light emission to become 1/e of the initial value, which time for commercial storage phosphors is about 1 $\mu s$.

As described in lastmentioned US-P specification the instantaneously emitted fluorescent light on photostimulation arises from a very small portion of the phosphor plate upon which the photostimulating light impinges, but the "after-glow" light is in decaying manner emitted by the whole surface of the phosphor plate that already underwent photostimulation.

A light-collector means (see Fig. 7 of said US-P) that covers a broader phosphor plate area than momentarily struck by the photostimulating light will allow an amount of "after-glow" light to become mixed with the instantaneously emitted light. Hereby the signal-to-noise ratio (S/N) becomes less and image quality is impaired. However, such is only true for read-out systems wherein the speed of scanning is very high. At pixel scan times substantially longer than the above mentioned "response time" the amount of after-glow light arising from an already photostimulated phosphor area becomes neglegible. A pixel scan time of e.g. 4 µs is commercially fully acceptable for pixels having a diameter of about 0.1 mm. The scanning of a full line of a conventional phosphor plate takes in that case about 15 to 20 ms. The ratio of said pixel scan time (4 µs) to the above mentioned "response time" (about 0.5 µs) of a useful storage phosphor is sufficiently large to avoid substantially lasting emission of after-glow light of a phosphor area already scanned by a photostimulating light spot having a diameter smaller than or corresponding with the above mentioned pixel size.

EP-A-0 451 913 and EP-A-0 210 505 both show single optical fibres used as collector waveguides. EP-A-0 559 118 has a bundle of fibres, all of which are located at one point on the concave surface.

The fluorescent light emitted by photostimulation of phosphor particles dispersed in a phosphor-binder layer will be strayed and actually emitted in all directions from the point struck by the photostimulating light. A light collector having a relatively large input area (opening angle) will collect practically all the emitted light, not just that what emerges perpendicularly from the phosphor-binder layer.

At a pixel scan time smaller than the above defined "response time" the image resolution will for the major part be defined by the composition of the phosphor plate and the size of the photostimulating light spot, and not by the size of the light input area of the light collector used for receiving the fluorescent light obtained by photostimulation.

The "pixel scan time" is preferably a factor 4 smaller than said "response time". Under these conditions "relatively large area" light collectors may be used which provide by their substantially higher light collection a series of substantially higher output signals with acceptable noise.

When using optical fibers in the light collecting means it is necessary to consider the limitations that are set by the numerical aperture (NA) of the fibers. The numerical aperture defines the angle ($\theta$) of acceptance of input light. The numerical aperture of multimode or single mode fibers is defined as :

$$NA = (n_1{}^2 - n_2{}^2)^{1/2} = \sin \theta$$

wherein:

$n_1$ and $n_2$ are respectively the refractive indices of the fiber core and the cladding material of the fiber involved (ref. "Fiber Optics Handbook" - An Introduction and Reference Guide to Fiber Optic Technology and Measurement Techniques - 3rd. edition by Christian Hentschel - Hewlett-Packard GmbH, Boeblingen Instruments Division Federal Republic of Germany, March 1989, p. 50-53 and 76-83. Numerical apertures of common optical fibers may be in the range of 0.1 to 0.5, which correspond with total light acceptance angles $2\theta$ of about 12° to 60°.

The use of a fluorescent light collector having a relatively large light input area has several advantages resulting from the higher signal yield. First, it would be possible to reduce the X-ray dose (a reduced X-ray dose is patient-friendly). Second, it would be possible to use storage phosphors with less X-ray conversion efficiency than the presently used $Eu^{2+}$ doped barium fluorobromides, but e.g. having better chemical properties (e.g. better stability against moisture as is the case for the $Eu^{2+}$ barium halosilicates of US-P 5,140,163) with the same X-ray dose as is used in prior art light collector read out systems characterized by the use of a fluorescent light collector angle with small input face. Third, it would be possible to operate with thinner phosphor layers for a same light input, such being in favour of image sharpness, and fourth it would be possible to use less powerful photostimulation sources such as solid state infrared-light (IR) emitting lasers having a very compact structure as described e.g. in published EP-A 0 559 258.

3. Objects of and Summary of the Invention

It is an object of the present invention to provide an apparatus suited for use in the reading out of image information recorded in a photostimulable phosphor element by photostimulating the same and measuring the light emitted upon photostimulation, wherein said apparatus contains a light collecting means for efficiently collecting fluorescent light emitted by photostimulation of a phosphor element that has been exposed previously with penetrating radiation, e.g. X-ray radiation.

It is another object of the present invention to provide a scanner including said apparatus.

It is a further object of the present invention to provide a method for efficiently reading out light emitted upon photostimulation of a recording element for penetrating radiation containing a storage phosphor.

Other objects and advantages of the present invention will become clear from the further description and drawings.

In order to satisfy the above objects there is provided an apparatus suited for use in the photostimulation and reading out of image information recorded in a photostimulable phosphor-containing layer by photostimulating the same and collecting the light emitted upon photostimulation, said apparatus comprising:

(1) at least one means for producing a photostimulating radiation beam and emitting it onto said phosphor-containing layer;

(2) a bundle of light-collecting optical fibers C for collecting through their input openings fluorescent light emitted by photostimulation of said phosphor layer,

characterized in that said optical fibers C have their input openings for accepting said fluorescent light arranged in a concave plane with respect to said phosphor-containing layer, and have said input openings symmetrically or asymmetrically surrounding said photostimulating radiation beam.

The present invention further provides a scanner suited for use in the reading out of image information recorded by penetrating radiation in a photostimulable phosphor-containing layer by photostimulating the same and collecting the light emitted upon photostimulation, wherein said scanner comprises the above defined apparatus according to the present invention, and wherein in said apparatus the optical fibers C at their output ends are coupled to a photo-electronic sensor transducing light energy into electrical energy.

Further in accordance with the present invention there is provided a method for reading out fluorescent light emitted upon photostimulation of a phosphor-containing layer that has been struck imagewise by penetrating radiation, wherein said method contains the step of reading out said fluorescent light by means of a scanner comprising the above defined apparatus according to the present invention, and at a pixel scan time longer than the "response time" of the phosphor present in said phosphor-containing layer, the "pixel scan time" being the time for scanning a length of 0.1 mm on the phosphor-containing layer, and said "response time" being the photostimulation time to reach half of the maximum intensity of emitted fluorescent light in a non-moving photostimulated spot of the phosphor-containing layer.

4. Brief Description of the Drawings

Fig. 1 shows an embodiment of a read out apparatus according to the present invention suited for use in the reading out of image information recorded by penetrating radiation in a photostimulable phosphor-containing layer by stimulating the same and collecting the light emitted upon photostimulation.

Fig. 2 shows another embodiment of a read out apparatus according to the present invention.

Fig. 3 shows still another embodiment of a read out apparatus according to the present invention.

Fig. 4 shows an embodiment of a scanner containing a read out apparatus according to the present invention.

5. Detailed Description of the Invention

The concave plane in which said optical fibers C have their input openings has preferably a curvature such that all said optical fibers C are capable to accept fluorescent light emitted by a spot of said phosphor-containing layer at the moment of striking said layer with photostimulating light. The photostimulating light is emitted e.g. through at least one optical fiber E.

According to a preferred embodiment said concave plane has the form of a portion of a true sphere, e.g. has the shape of half of a sphere (is dome-shaped), or has the form of a portion of an ellipsoidal, hyperboloidal or paraboloidal body.

The angle ($\theta$) of acceptance of light of said optical fibers C at the side of the phosphor-containing layer is preferably as wide as possible (about 60°) for maximal light input but may be reduced for improving image-sharpness and is e.g. between 1° and 6°.

The optical fibers may be of any fiber mode, e.g. are step-index fibers or graded index fibers which belong to the class of multimode fibers or single mode fibers (for the definition and use of said fibers reference is made to the above mentioned "Fibers Optics Handbook")

By using optical fibers C that have a coloured core relatively strongly absorbing said photostimulating light but having also a relatively high transmittancy for the fluorescent light emitted by photostimulation, the use of an additional filter for preventing the photostimulating light from entering the photo-electronic detector, e.g. photomultiplier tube, may not be necessary.

A scanner according to the present invention may contain a known scanning mechanism, e.g. X-Y scanning mechanism in which the photostimulating light beam and layer containing photostimulable phosphor can be brought into relative X-Y movement.

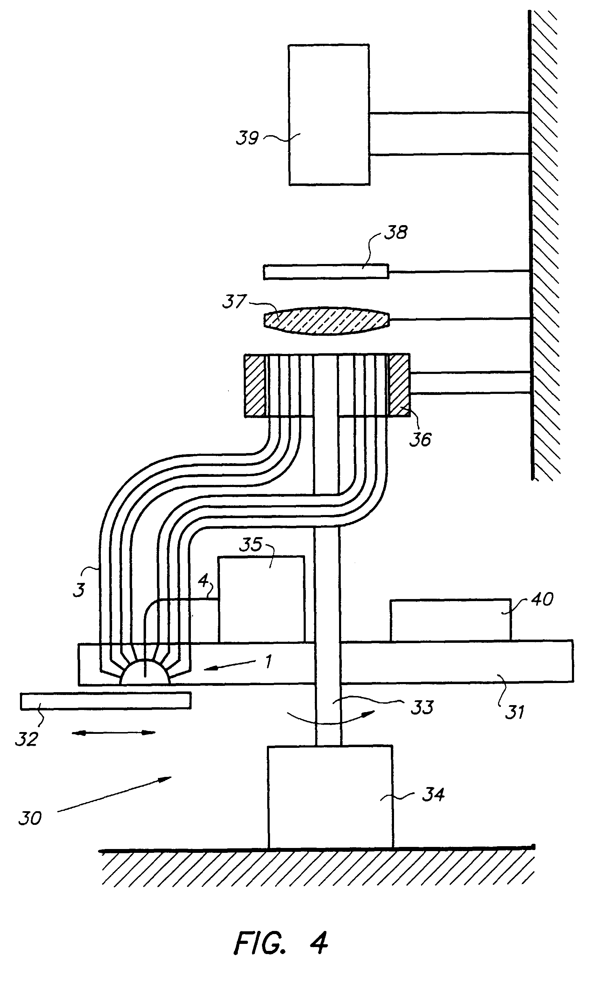

Said relative X-Y movement may be obtained by moving the photostimulation and read out device according to the present invention and consequently also its photostimulating light beam at constant unidirectional speed in the X-direction while the phosphor-containing plate is kept in reciprocating motion in the Y-direction. For obtaining said reciprocating motion the phosphor-containing plate may be carried by a carriage that is reciprocated by a mechanism as described e.g. in the book "Machine Devices and Instrumentation" edited by Nicholas P. Chironis, Mc Graw-Hill Book Company - New York, (1966), p. 54-55 and 235. An embodiment of a device producing reciprocating motion is shown e.g. in Fig. 4 of published European patent application 0 558 825 relating to a method of recording a penetrating radiation image. Constant straight line course motion of the read out apparatus according to the present invention can be obtained by joining it to (a) nut(s) driven by a screw bar (threaded bar) rotating at constant angular speed.

According to another embodiment scanningwise photostimulation and reading out of thereby obtained fluorescent light proceeds by means of a scanner wherein a flexible phosphor-binder layer sheet being mounted on a rotable drum is rotating at constant angular speed. A read out apparatus according to the present invention is given a straight line motion with constant speed parallel to the axis of said drum using a lead screw mechanism as shown e.g. in the drawing of patent specification WO 93004552 relating to a thermal printer. Said printer includes a rotating drum carrying a thermosensitive recording material in conjunction with a printing head that is given constant straight line motion along the axis of said drum to scan said recording material.

A particular scanner according to the present invention contains the photostimulation and read out apparatus joined to a means that can be rotated at constant angular speed in a plane parallel with respect to a phosphor-containing layer which is carried by a means that can obtain a constant straight line course motion with respect to the photostimulating light beam emitted by a light source contained in said scanner.

A scanner according to the present invention may be used in conjunction with any type of recording element that contains a photostimulable storage phosphor layer. A survey of suitable stimulable phosphors and layer compositions can be found in published European patent application 0 522 609.

Photostimulating light may include visible (in the wavelength range of 400 to 700 nm) as well as infrared light (in the wavelength range <700 nm to 1100 nm) and has not necessarily to stem from a laser light source.

When photostimulation is carried out with infrared (IR) light optical fibers are used that have optimal guidance for that light. The composition and use of IR optical fibers is discussed e.g. in Physik unserer Zeit / 21. Jahrg. 1990 Nr. 4. p. 172 and seq.

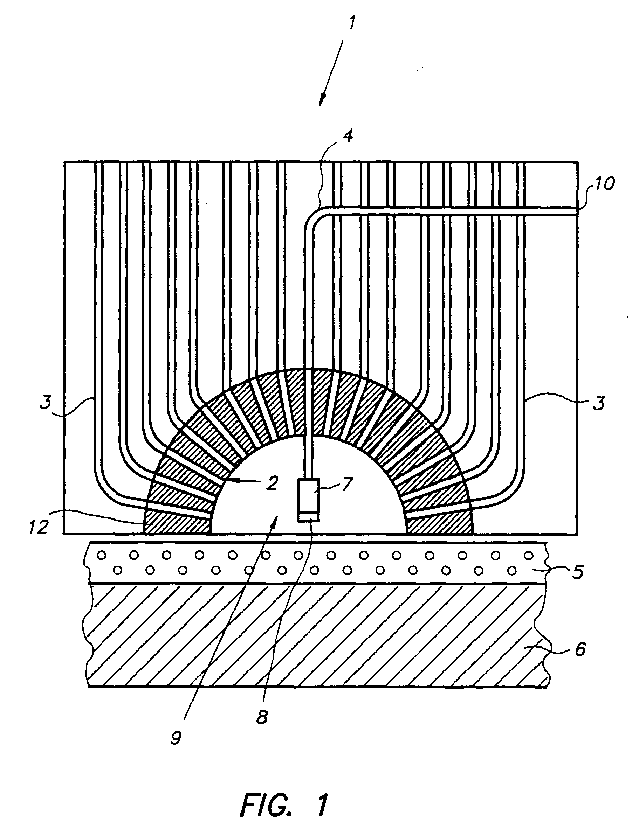

Fig. 1 is a cross-sectional view of a read out apparatus according to the present invention combining in an optical device 1 photostimulation and light collecting optics in which the light collector part is in the form of an optical fiber bundle of optical fibers 3 arranged radially in a dome-shaped cap 12 with spheroidally curved innersurface 2. The light collector fibers 3 are positioned in radial direction with respect to the point were photostimulating light leaving single optical fiber 4 strikes the surface of a photostimulable phosphor layer 5. Said phosphor layer 5 is supported by a sheetlike carrier 6. In such a configuration the optical fibers 3 symmetrically surround the centrally located single optical fiber 4 which receives, guides and emits the photostimulating light. At the output end of said optical fiber 4 there is a rod lens 7 with graded refractive index (GRIN) profile similar to a graded index fiber but with larger diameter, known as SELFOC (tradename of Nippon Sheet Glass Co.) The light entering the SELFOC (tradename) lens 7 from the single optical fiber 4 leaves said lens in the form of a collimated beam (consisting of parallel light rays). The optical behaviour and data concerning SELFOC (tradename) lenses are discussed in the already mentioned "Fiber Optics Handbook" , p. 197-198.

In a particular embodiment the output end of said rod lens 7 is provided with an "antireflection" (AR) coating 8, e.g. of $MgF_2$ (see for the theory and effects of antireflection coatings based on interference the above mentioned "Fiber Optics Handbook", p. 4-5 and 90-93) in appropriate thickness for diminishing reflection of photostimulating light. A reflection as small as possible of the photostimulating light is in favour of image sharpness.

Instead of an anti-reflection coating a semi-transparent mirror coating may be applied at the output surface of said rod lens 7. Such makes that less fluorescent light can enter the emitter fiber 4 and is not lost for detection. For example, onto the output end of the rod lens 7, a film of vacuum deposited rhodium having an average reflectance of 72 % is applied or a vacuum deposited layer of the alloy INCONEL [for such alloy reference is made to SPSE Handbook of Photographic Science and Engineering by Woodlief Thomas, Jr., Editor, A Wiley-Interscience Publication, John Wiley & Sons, New York (1973), p. 291-295]. The cavity 9 formed by the domeshaped cap may be filled with optically clear resin for fixedly mounting the optical fiber 4. Instead of using only one optical emitter fiber 4 a bundle of said fibers may be used but preferably less in number than the light-collector fibers 3. Light of a laser, e.g. solid state laser (diode laser), or light emitting diode (LED) enters the emitter fiber 4 at its input end 10.

According to an embodiment for preventing photostimulating light to enter the light-collector fibers 3 the cavity 9 of the half-sphere is filled with a solid filter material absorbing that light except in the light output face area of the photostimulating light emitting fiber(s) 4.

According to an embodiment the dome-shaped area between the light-input faces of the light collector fibers 3 is made of or coated with a material that absorbs the photostimulating light as well as the emitted fluorescent light, such being in favour of a higher signal-to-noise ratio.

The entrance opening in the dome-shaped cap 12 for the fiber(s) 4 does not need to be in the apex point of the cap but may be under an angle less than 90°, e. g. has its opening axis at 45°, with respect to the phosphor-containing layer 5.

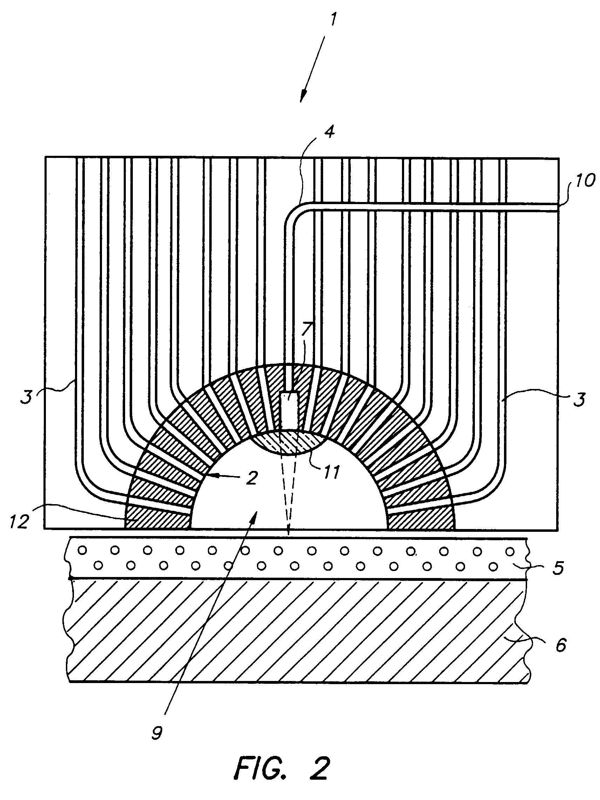

Fig. 2 illustrates a special embodiment wherein in said device the collimated beam of photostimulation light emerging from a SELFOC (tradename) lens 7 is focused onto the phosphor-containing layer 5 by means of a lens 11; said embodiment provides a particularly good spatial resolution. Spatial resolution is limited by the pixel size.

In a radiographic system operating with photostimulable storage phosphor elements the laser beam diameter sets the minimum size of a single picture element, or pixel. So, a smaller focused spot of the laser beam striking the surface of the phosphor-containing layer is in favour of a better spatial image resolution. Conventional laser beam scanning operates with a beam diameter of 0.1 mm [ref. Digital Storage Phosphor Radiography - Studies of noise and signal - Doctoral Dissertation by Risto Miettunen - Department of Diagnostic Radiology Helsinki University Central Hospital (Dec. 18th, 1991), p. 10].

In a method for manufacturing the optical device as illustrated in said Fig. 1 and 2 the optical fibers 3 are fitted in pre-drilled holes (e.g. drilled by laser beam) in a metal, glass or resinous domeshaped cap 12 and sealed by resin (e.g. epoxy resin). The parts of the fibers 3 extending inwardly are removed by grinding followed by polishing.

In the apex point of the cap 12 the single emitter fiber 4 (or small bundle of fibers 4) is introduced having a part of it (at least the SELFOC part) extending inside said cap.

The largest diameter of the cap is for the purpose of having a good light collection preferably in the range of 1 to 5 cm. Such size makes it possible to mount the fibers relatively easily, and to obtain a good coupling of the bundle with existing photomultiplier tubes having an entrance window diameter of e.g. 6 cm. By the radial mounting over 360° of the optical light-collector fibers 3 a very substantial part of the light emerging in strayed manner from the phosphor layer surface is accepted (collected) and sent to the entrance opening of a photoelectronically light sensor, preferably a photomultiplier tube (not shown in the drawing). Said photomultiplier tube may be combined with a filter blocking the photostimulation light, e.g. using a classical colour cut-off or band pass filter (glass filter) or holographic band-reject filter as described e.g. in published European patent application (EP-A) 532 800.

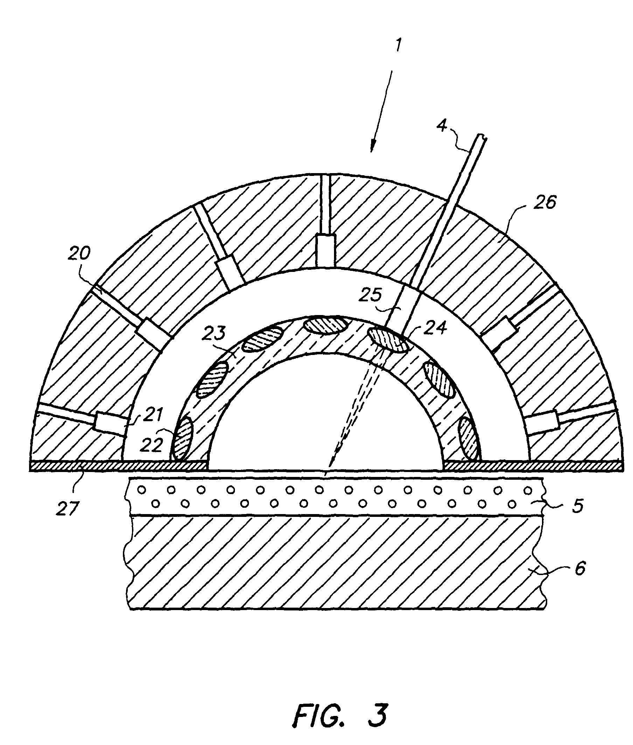

Fig. 3 is a cross-sectional view of a read out apparatus according to the present invention combining in an optical device 1 photostimulation and light collecting optics in which the light collector part is in the form of optical fibers consisting of common optical fibers 20 each coupled to a SELFOC (tradename) rod lens 21. Fluorescent light obtained by photostimulation is focused onto the input side of each of said rod lenses 21 which each have an associated light converging lens 22. Said lenses 22 are spatially arranged in such a way that they form an inpolyhedron in a dome-shaped cap 23 having the optical axis of each lens 22 coinciding in the area of the phosphor-containing layer 5 struck by the photostimulating light. The common optical fibers 20 guide the fluorescent light as explained for fibers 3 in Fig. 1 towards the entrance opening of a photomultiplier tube.

The lenses 22 are positioned in the required focusing position into cavities or channels machined, e.g. drilled, therefor in the cap 23 which may be made of a transparent resinous material.

Cap 23 contains a lens 24 coupled to a light-collimating rod lens 25 connected to the output opening of optical fiber(s) 4 for guiding the photostimulating light from a photostimulation light emitting light source (not shown in the drawing) towards the phosphor-containing layer 5 that is coated on support 6. The coupled optical fibers 20, 21 are located in a larger cap 26 covering cap 24 whereto cap 26 is fixed with a ring 27.

The optical device according to Fig. 3 operates with less optical light collector fibers than the devices illustrated in Fig. 1 and 2.

In a simplified embodiment of the optical device illustrated in Fig. 3 the said optical fiber(s) 4 and rod lens 25 are omitted and a photostimulating collimated laser beam is focused directly by lens 24 onto the phosphor-containing layer 5.

In another simplified embodiment even said lens 24 is omitted and a sufficiently narrow laser beam (the laser beam diameter being preferably smaller than 0.1 mm) of photostimulating light is directed directly, e.g. under an angle of 45°, onto said phosphor-containing layer without intermediate optics.

Fig. 4 represents a cross-sectional view of a turntable-type scanner 30 in which a rotable disk 31 incorporates the above defined optical device 1 comprising light-collector fibers 3 surrounding an emitter fiber 4 guiding photostimulation light onto an X-ray exposed phosphor layer-containing plate 32. Said plate 32 is moved at constant linear speed underneath said disk 31 rotating at constant angular speed whereby the optical device 1 scans the phosphor layer at regular intervals. The disk 31 is kept at constant circular motion even when no X-ray exposed plates have to be read out. Such avoids a delay in read out since acceleration and braking of the disk (taking some time) will then not be necessary.

In order to maintain the rotation speed at a constant value an encoder disk system known in the art may be used (ref. e.g. US-P 4,400,443) wherein the encoder disk (not shown in the drawing) and the disk 31 are mounted on the same shaft 33 rotably driven by a DC servo motor 34.

The phosphor layer-containing plate 32 obtains reciprocating motion underneath disk 31 by means of e.g. a lead screw mechanism (not shown in the drawing) known e.g. from a lathe. During that motion in the direction of the shaft 33 the X-ray exposed plate 32 (possibly still joined to a stiff cassette cover) is photostimulated by light emerging from the emitter fiber 4. In the embodiment illustrated in Fig. 4 the light of a solid state diode laser 35 or of a light emitting diode is optically coupled into said fiber 4.

A survey of lasers useful in photostimulation is given in Research Disclosure Nr. 308 (DEC. 1989) item 308117. It is pointed out however that the light source for generating photostimulating light is not restricted to a laser beam emitting light source.

Any kind of light source (e.g. gas discharge lamp, fluorescent lamp or incandescent lamp) emitting light having wavelengths situated in the photostimulation band and sufficiently different in wavelength from the fluorescent light emitted on photostimulation may be used. Such light sources are used optionally in conjunction with a band filter or cut off filter at their light output side.

For producing the photostimulating light semiconductor lasers are preferred for their compactness, cheapness, little power consumption and easy modulation by changing their drive current.

Fluorescent light emitted by the scanning-wise photostimulated plate 32 is collected by the light-collector fibers 3 which are bent in the direction of the axis of shaft 33 which rotates in a supported bearing 36. Each collector fiber 3 ends at its output side in a SELFOC (tradename) fiberlike rod lens (not shown). These lenses emit collimated fluorescent light that is focused by means of a lens 37 onto the photocathode of a photomultiplier tube 39.

Between the photomultiplier tube 39 and lens 37 a filter 38 serves to block the photostimulation light and transmits selectively the fluorescent light obtained on photostimulation of the phosphor-layer containing plate 32.

According to an embodiment (not illustrated in Fig. 4) the output face of the bundle of light collector fibers is through a small air gap directly optically coupled to the input face of the photomultiplier tube that is provided with a filter.

According to still another embodiment said optical coupling is realized by means of a further bundle of light collector fibers that are stationary centrally located above the output faces of the rotating fibers 3 and guide the fluorescent light, optionally still mixed with photostimulting light, into an optical filter blocking the photostimulating light and allowing the fluorescent light to enter the photomultiplier tube. In order to improve the optical coupling efficiency said stationary centrally located fibers are ending into SELFOC (tradename) fibers that are directing a bundle of collimated light towards the input face of said filter.

The analog electrical output signals of the photomultiplier tube are digitized and intermediately stored for read out on CRT-display or are used for modulating a writing light beam in the production of a hard copy.

In the scanner illustrated in Fig. 4 a counterweight 40 on the rotating disk 31 ensures a balanced vibration-free rotation of the optical device 1.

**Claims**

1. An apparatus suited for use in photostimulation and reading out of image information recorded in a photostimulable phosphor-containing layer (5) by photostimulating the same and collecting the light emitted upon photostimulation, said apparatus comprising:

   (1) at least one means (4) for producing a photostimulating radiation beam and emitting it onto said phosphor-containing layer (5);
   (2) a bundle of light-collecting optical fibers C (3) for collecting through their input openings fluorescent light emitted by photostimulation of said phosphor layer,

   characterized in that said optical fibers C (3) have their input openings for accepting said fluorescent light arranged in a concave surface (12) with respect to said phosphor-containing layer (5), and have said input openings symmetrically or asymmetrically surrounding said photostimulating radiation beam.

2. Apparatus according to claim 1, wherein said photostimulating radiation beam is guided and emitted onto said phosphor layer through at least one optical fiber E.

3. Apparatus according to claim 1 or 2, wherein said optical fibers C have their input openings arranged in a concave surface that has a curvature such that all said optical fibers C are capable to accept fluorescent light emitted by a spot of said phosphor-containing layer at the moment of striking said layer with said photostimulating light beam.

4. Apparatus according to any of claims 1 to 3, wherein said concave surface has the form of a portion of a true sphere, or has the form of a portion of an ellipsoidal, hyperboloidal or paraboloidal body.

5. Apparatus according to any of claims 1 to 4, wherein said optical fibers C have at the side of said phosphor-containing layer an angle (θ) of acceptance of light that is as wide as possible for maximal light input.

6. Apparatus according to any of claims 1 to 4, wherein the optical fibers C have at the side of said phosphor-containing layer an angle (θ) of acceptance of light that is between 1° and 6°.

7. Apparatus according any of the preceding claims, wherein the optical fibers C have a coloured core that relatively strongly absorbs said photostimulating light but has relatively high transmittancy for the fluorescent light emitted by photostimulation.

8. Apparatus according to any of the claims 2 to 7, wherein at the output end of each of said optical fibers E directed towards said phosphor-containing layer there is a rod lens with graded refractive index (GRIN) profile similar to a graded index fiber but with larger diameter, which rod lens through its output end emits collimated light.

9. Apparatus according to claim 8, wherein each said rod lens has at its light output end an "antireflection" (AR) coating.

10. Apparatus according to claim 8, wherein each said rod lens has at its light output end a semi-transparent mirror coating.

11. Apparatus according to claim 8, wherein the collimated beam of photostimulating light emerging from each of said rod lenses is focused by means of a lens onto said phosphor-containing layer.

12. Apparatus according to any of the claims 1 to 7, wherein said apparatus comprises light collecting optics in which the light collecting optics contain said optical fibers C each being coupled to a rod lens which is positioned in such a way that fluorescent light obtained by photostimulation can be focused thereon with a light converging lens associated therewith, said light converging lenses being spatially arranged in such a way that they form an inpolyhedron in a dome-shaped cap and have their optical axes coinciding in a same spot of said phosphor-containing layer.

13. A scanner suited for use in the reading out of image information recorded by penetrating radiation in a photostimulable phosphor-containing layer (5) by photostimulating the same and collecting the light emitted upon photostimulation, wherein said scanner comprises a photostimulation and read out apparatus comprising:

(1) at least one means (4) for producing a photostimulating radiation beam and emitting it onto said phosphor-containing layer (5);
(2) a bundle of light-collecting optical fibers C (3) for collecting through their input openings fluorescent light emitted by photostimulation of said phosphor layer (5),

characterized in that said optical fibers C (3) have their input openings for accepting said fluorescent light arranged in a concave surface (12) with respect to said phosphor-containing layer (5), and have said input openings symmetrically or asymmetrically surrounding said photostimulating radiation beam, and said optical fibers C at their output ends are coupled to a photo-electronic sensor transducing light energy into electrical energy.

14. Scanner according to claim 13, wherein said scanner comprises an X-Y scanning mechanism by means of which the photostimulating light beam and phosphor-containing layer can be brought into relative X-Y movement.

15. Scanner according to claim 14, wherein said relative X-Y movement is obtained by moving said apparatus and consequently also its photostimulating light beam at constant unidirectional speed in the X-direction while the phosphor-containing plate is in reciprocating motion in the Y-direction.

16. Scanner according to claim 13, wherein said scanner comprises (1) a flexible phosphor-binder layer sheet mounted on a rotable drum that is capable of rotating at constant angular speed, and

(2) said photostimulation and read out apparatus is arranged in such a way that it can be given parallel to the axis of said drum a straight line motion at constant speed by means of a lead screw mechanism.

17. Scanner according to claim 13, wherein said photostimulation and read out apparatus is joined to a means that can be rotated at constant angular speed and in a plane parallel with respect to said phosphor-containing layer which is carried by a means that can obtain a line course motion at constant speed with respect to said photostimulating light beam.

18. Scanner according to any of the claims 13 to 17, wherein said concave plane in which said optical fibers C have their input openings has such a curvature that all said optical fibers C are capable to accept fluorescent light emitted by a spot of said phosphor-containing layer at the moment of striking said layer with said photostimulating light beam.

19. Scanner according to claim 18, wherein said concave plane has the form of a portion of a true sphere, or has the form of a portion of an ellipsoidal, hyperboloidal or paraboloidal body.

20. Scanner according to any of claims 13 to 19, wherein said optical fibers C have their input openings arranged in a concave plane that has a curvature such that all said optical fibers C are capable to accept fluorescent light emitted by a spot of said phosphor-containing layer at the moment of striking said layer with photostimulating light emitted by at least one optical fiber E.

21. In a method for reading out fluorescent light emitted upon photostimulation of a phosphor-containing layer (5) that has been struck imagewise by penetrating radiation, the use of an apparatus comprising:

(1) at least one means (4) for producing a photostimulating radiation beam and emitting it onto said phosphor-containing layer (5);
(2) a bundle of light-collecting optical fibers C (3) for collecting through their input openings fluorescent light emitted by photostimulation of said phosphor layer (5),

characterized in that said optical fibers C (3) have their input openings for accepting said fluorescent light arranged in a concave surface (12) with respect to said phosphor-containing layer, and have said input openings symmetrically or asymmetrically surrounding said photostimulating radiation beam, and wherein said method contains the step of reading out said fluorescent light at a pixel scan time longer than the "response time" of the phosphor present in said phosphor-containing layer, the "pixel scan time" being the time for scanning a length of 0.1 mm on the phosphor-containing layer, and said "response time" being the photostimulation time to reach half of the maximum intensity of emitted fluorescent light in a non-moving photostimulated spot of the phosphor-containing layer.

**Patentansprüche**

1. Vorrichtung, geeignet zur Verwendung zur Photostimulierung und zum Auslesen von Bildinformation, die in einer einen photostimulierbaren Leuchtstoff enthaltenden Schicht (5) aufgezeichnet ist, durch Photostimulieren desselben und durch Sammeln des nach der Photostimulierung emittierten Lichtes, wobei diese Vorrichtung folgendes aufweist:

   (1) wenigstens ein Mittel (4) zum Erzeugen eines Strahls photostimulierender Strahlung und zum Emittieren dessen auf die Leuchtstoff enthaltende Schicht (5),
   (2) ein Bündel lichtsammelnder Lichtleitfasern C (3) zum Sammeln von durch Photostimulierung der Leuchtstoffschicht emittiertem Fluoreszenzlicht durch ihre Eintrittsöffnungen,

   dadurch gekennzeichnet, daß die Eintrittsöffnungen der Lichtleitfasern C (3) zum Aufnehmen des Fluoreszenzlichts in einer in bezug auf die Leuchtstoff enthaltende Schicht (5) konkaven Fläche (12) angeordnet sind und daß die Eintrittsöffnungen den Strahl photostimulierender Strahlung symmetrisch oder asymmetrisch umgeben.

2. Vorrichtung nach Anspruch 1, wobei der Strahl photostimulierender Strahlung durch wenigstens eine Lichtleitfaser E geleitet und auf die Leuchtstoffschicht emittiert wird.

3. Vorrichtung nach Anspruch 1 oder 2, wobei die Eintrittsöffnungen der Lichtleitfasern C in einer konkaven Fläche angeordnet sind, die eine solche Krümmung aufweist, daß alle Lichtleitfasern C in der Lage sind, Fluoreszenzlicht aufzunehmen, das von einem Punkt der Leuchtstoff enthaltenden Schicht in dem Moment des Auftreffens des photostimulierenden Lichtstrahls auf der Schicht emittiert wird.

4. Vorrichtung nach irgendeinem der Ansprüche 1 bis 3, wobei die konkave Fläche die Form eines Teils einer Kugelfläche oder die Form eines Teils eines elliptischen, hyperbolischen oder parabolischen Körpers hat.

5. Vorrichtung nach irgendeinem der Ansprüche 1 bis 4, wobei die Lichtleitfasern C auf der Seite der Leuchtstoff enthaltenden Schicht einen Öffnungswinkel (θ) für Licht aufweisen, der für maximalen Lichteintritt so groß wie möglich ist.

6. Vorrichtung nach irgendeinem der Ansprüche 1 bis 4, wobei die Lichtleitfasern C auf der Seite der Leuchtstoff enthaltenden Schicht einen Öffnungswinkel (θ) für Licht aufweisen, der zwischen 1° und 6° liegt.

7. Vorrichtung nach irgendeinem der vorhergehenden Ansprüche, wobei die Lichtleitfasern C einen farbigen Kern aufweisen, der das photostimulierende Licht vergleichsweise stark absorbiert, jedoch für das durch die Photostimulierung emittierte Fluoreszenzlicht eine vergleichsweise große Durchlässigkeit aufweist.

8. Vorrichtung nach irgendeinem der Ansprüche 2 bis 7, wobei sich an dem Austrittsende jeder der Lichtleitfasern E, die auf die Leuchtstoff enthaltende Schicht gerichtet sind, eine Stablinse mit einem Gradientenindexprofil (GRIN) befindet, die einer Gradientenindexfaser ähnlich ist, jedoch mit größerem Durchmesser, wobei die Stablinse durch ihr Austrittsende kollimiertes Licht emittiert.

9. Vorrichtung nach Anspruch 8, wobei jede Stablinse an ihrem Lichtaustrittsende eine "Antireflex"-Beschichtung (AR) aufweist.

10. Vorrichtung nach Anspruch 8, wobei jede Stablinse an ihrem Lichtaustrittsende eine halbdurchlässige Spiegelbeschichtung aufweist.

11. Vorrichtung nach Anspruch 8, wobei der aus jeder der Stablinsen austretende kollimierte photostimulierende Lichtstrahl mittels einer Linse auf die Leuchtstoff enthaltende Schicht fokussiert wird.

12. Vorrichtung nach irgendeinem der Ansprüche 1 bis 7, wobei die Vorrichtung eine lichtsammelnde Optik aufweist, wobei die lichtsammelnde Optik die Lichtleitfasern C umfaßt, von denen jede mit einer Stablinse gekoppelt ist, die derart positioniert ist, daß durch Photostimulierung erhaltenes Fluoreszenzlicht mittels einer der Stablinse zugeordneten, Licht konvergierenden Linse darauf fokussiert werden kann, wobei die Licht konvergierenden Linsen räumlich derart angeordnet sind, daß sie ein inwendiges Polyeder in einer kalottenförmigen Haube bilden und daß ihre optischen Achsen in demselben Punkt der Leuchtstoff enthaltenden Schicht zusammentreffen.

13. Abtasteinrichtung, geeignet zur Verwendung beim Auslesen von Bildinformation, die von durchdringender Strahlung in einer einen photostimulierbaren Leuchtstoff enthaltenden Schicht (5) aufgezeichnet wurde, durch Photostimulieren desselben und durch Sammeln des nach der Photostimulierung emittierten Lichtes, wobei diese Abtasteinrichtung eine Vorrichtung zur Photostimulierung und zum Auslesen aufweist, welche folgendes aufweist:

(1) wenigstens ein Mittel (4) zum Erzeugen eines Strahls photostimulierender Strahlung und zum Emittieren dessen auf die Leuchtstoff enthaltende Schicht (5),
(2) ein Bündel lichtsammelnder Lichtleitfasern C (3) zum Sammeln von durch Photostimulierung der Leuchtstoffschicht (5) emittiertem Fluoreszenzlicht durch ihre Eintrittsöffnungen,

dadurch gekennzeichnet, daß die Eintrittsöffnungen der Lichtleitfasern C (3) zum Aufnehmen des Fluoreszenzlichts in einer in bezug auf die Leuchtstoff enthaltende Schicht (5) konkaven Fläche (12) angeordnet sind, daß die Eintrittsöffnungen den Strahl photostimulierender Strahlung symmetrisch oder asymmetrisch umgeben und daß die Lichtleitfasern C an ihren Austrittsenden mit einem photoelektronischen Sensor gekoppelt sind, der Lichtenergie in elektrische Energie umwandelt.

14. Abtasteinrichtung nach Anspruch 13, wobei die Abtasteinrichtung einen X-Y Abtastmechanismus aufweist, mittels dessen der photostimulierende Lichtstrahl und die Leuchtstoff enthaltende Schicht in eine gegenseitige X-Y Bewegung versetzt werden können.

15. Abtasteinrichtung nach Anspruch 14, wobei die gegenseitige X-Y Bewegung dadurch erhalten wird, daß die Vorrichtung und folglich auch ihr photostimulierender Lichtstrahl in der X-Richtung mit konstanter Geschwindigkeit in eine Richtung bewegt wird, während die Leuchtstoff enthaltende Platte sich in der Y-Richtung hin- und herbewegt.

16. Abtasteinrichtung nach Anspruch 13, wobei die Abtasteinrichtung (1) ein flexibles Blatt einer Leuchtstoff-Bindemittel-Schicht aufweist, das auf einer drehbaren Trommel befestigt ist, die sich mit konstanter Winkelgeschwindigkeit drehen kann, und
(2) die Photostimulierungs- und Auslesevorrichtung derart angeordnet ist, daß sie mittels eines Drehspindelmechanismus parallel zu der Achse der Trommel mit konstanter Geschwindigkeit geradlinig bewegt werden kann.

17. Abtasteinrichtung nach Anspruch 13, wobei die Photostimulierungs- und Auslesevorrichtung mit einem Mittel verbunden ist, das mit konstanter Winkelgeschwindigkeit und in einer Ebene parallel zu der Leuchtstoff enthaltenden Schicht gedreht werden kann, die von einem Mittel transportiert wird, welches eine geradlinige Bewegung mit konstanter Geschwindigkeit in bezug auf den photostimulierenden Lichtstrahl ausführen kann.

18. Abtasteinrichtung nach irgendeinem der Ansprüche 13 bis 17, wobei die konkave Fläche, in der sich die Eintrittsöffnungen der Lichtleitfasern C befinden, eine solche Krümmung aufweist, daß alle Lichtleitfasern C in der Lage sind, Fluoreszenzlicht aufzunehmen, das von einem Punkt der Leuchtstoff enthaltenden Schicht in dem Moment des Auftreffens des photostimulierenden Lichtstrahls auf der Schicht emittiert wird.

19. Abtasteinrichtung nach Anspruch 18, wobei die konkave Fläche die Form eines Teils einer Kugelfläche oder die Form eines Teils eines elliptischen, hyperbolischen oder parabolischen Körpers hat.

20. Abtasteinrichtung nach irgendeinem der Ansprüche 13 bis 19, wobei die Eintrittsöffnungen der Lichtleitfasern C in einer konkaven Fläche angeordnet sind, die eine solche Krümmung aufweist, daß alle Lichtleitfasern C in der Lage sind, Fluoreszenzlicht aufzunehmen, das von einem Punkt der Leuchtstoff enthaltenden Schicht in dem Moment des Auftreffens von wenigstens einer Lichtleitfaser E emittiertem photostimulierenden Licht auf der Schicht emittiert wurde.

21. Bei einem Verfahren zum Auslesen von Fluoreszenzlicht, das nach der Photostimulierung einer Leuchtstoff enthaltenden Schicht (5), auf welche durchdringende Strahlung bildartig aufgetroffen ist, emittiert wurde, die Verwendung einer Vorrichtung, die folgendes aufweist:

(1) wenigstens ein Mittel (4) zum Erzeugen eines Strahls photostimulierender Strahlung und zum Emittieren dessen auf die Leuchtstoff enthaltende Schicht (5),
(2) ein Bündel lichtsammelnder Lichtleitfasern C (3) zum Sammeln von durch Photostimulierung der Leuchtstoffschicht (5) emittiertem Fluoreszenzlicht durch ihre Eintrittsöffnungen,

dadurch gekennzeichnet, daß die Eintrittsöffnungen der Lichtleitfasern C (3) zum Aufnehmen des Fluoreszenzlichts in einer in bezug auf die Leuchtstoff enthaltende Schicht konkaven Fläche (12) angeordnet sind und daß die Eintrittsöffnungen den Strahl photostimulierender Strahlung symmetrisch oder asymmetrisch umgeben, und wobei das Verfahren den Schritt des Auslesens des Fluoreszenzlichts mit einer Bildpunkt-Abtastzeit beinhaltet, welche länger ist als die "Ansprechzeit" des in der Leuchtstoff enthaltenden Schicht vorhandenen Leuchtstoffs, wobei die "Bildpunkt-Abtastzeit" die für das Abtasten einer Strecke von 0,1 mm auf der Leuchtstoff enthaltenden Schicht benötigte Zeit ist, und wobei die "Ansprechzeit" die Dauer der Photostimulierung bis zum Erreichen der halben Maximalintensität des emittierten Fluoreszenzlichtes in einem sich nicht bewegenden, photostimulierten Punkt der Leuchtstoff enthaltenden Schicht ist.

## Revendications

1. Un appareil approprié pour être utilisé dans la photostimulation et la lecture d'information imagée qui est enregistrée dans une couche (5) contenant un luminophore photostimulable, par la photostimulation de cette couche et par le captage de la lumière émise lors de la photostimulation, lequel appareil comprend:

(1) au moins un dispositif (4) pour produire un faisceau de rayonnement photostimulant et pour émettre ce faisceau sur la couche (5) contenant un luminophore;
(2) un faisceau de fibres optiques C collectrices de lumière (3) pour capter à travers leurs ouvertures d'entrée la lumière fluorescente émise par la photostimulation de la couche de luminophore,

caractérisé en ce que pour accepter la lumière fluorescente, les ouvertures d'entrée des fibres optiques C (3) sont arrangées dans une surface concave (12) par rapport à la couche (5) contenant un luminophore, et que ces ouvertures d'entrée entourent symétriquement ou asymétriquement le faisceau de rayonnement photostimulant.

2. Appareil selon la revendication 1, caractérisé en ce que le faisceau de rayonnement photostimulant est guidé et émis sur la couche de luminophore à travers au moins une fibre optique E.

3. Appareil selon la revendication 1 ou 2, caractérisé en ce que les ouvertures d'entrée des fibres optiques C sont arrangées dans une surface concave qui a une courbure telle que toutes les fibres optiques C sont capables d'accepter la lumière fluorescente émise par un point de la couche contenant un luminophore au moment où le faisceau de lumière photostimulante atteint cette couche.

4. Appareil selon l'une quelconque des revendications 1 à 3, caractérisé en ce que la surface concave a la forme d'une partie d'une vraie sphère, ou a la forme d'une partie d'un corps ellipsoïdal, hyperboloïdal ou paraboloïdal.

5. Appareil selon l'une quelconque des revendications 1 à 4, caractérisé en ce que les fibres optique C ont du côté de la couche contenant un luminophore un angle (θ) d'acceptation de lumière qui est aussi large que possible pour une entrée de lumière maximale.

6. Appareil selon l'une quelconque des revendications 1 à 4, caractérisé en ce que les fibres optiques C ont du côté de la couche contenant un luminophore un angle (θ) d'acceptation de lumière qui se situe entre 1° et 6°.

7. Appareil selon l'une quelconque des revendications précédentes, caractérisé en ce que les fibres optiques C ont un noyau coloré qui absorbe relativement fort la lumière de photostimulation, mais possède un pouvoir de transmission relativement élevé pour la lumière fluorescente émise par la photostimulation.

8. Appareil selon l'une quelconque des revendications 2 à 7, caractérisé en ce que, à l'extrémité de sortie de chacune des fibres optiques E dirigées vers la couche contenant un luminophore, il se trouve une lentille tige avec un profile à gradient d'indice de réfraction (GRIN) similaire à une fibre à gradient d'indice mais avec un diamètre plus large, laquelle lentille tige émet de la lumière collimatée à travers son extrémité de sortie.

9. Appareil selon la revendication 8, caractérisé en ce que chaque lentille tige a une couche antiréflexion (AR) à sa sortie de lumière.

10. Appareil selon la revendication 8, caractérisé en ce que chaque lentille tige a une couche spéculaire semi-transparente à sa sortie de lumière.

11. Appareil selon la revendication 8, caractérisé en ce que le faisceau collimaté de lumière photostimulante sortant de chacune des lentilles tige est focalisé sur la couche contenant un luminophore au moyen d'une lentille.

12. Appareil selon l'une quelconque des revendications 1 à 7, caractérisé en ce que cet appareil comprend une optique captant la lumière, laquelle optique contient les fibres optiques C qui sont chacune couplées à une lentille tige qui est positionnée d'une telle manière que la lumière fluorescente obtenue par la photostimulation peut être focalisée là-dessus avec une lentille convergeant la lumière qui est associée à la lentille tige, les lentilles convergeant la lumière étant arrangées dans l'espace d'une telle manière qu'elles forment un polyèdre inscrit dans un capot en forme de coupole et que leurs axes optiques coïncident dans le même point de la couche contenant un luminophore.

13. Un scanner approprié pour être utilisé dans la lecture d'information imagée qui est enregistrée par un rayonnement pénétrant dans une couche (5) contenant un luminophore photostimulable, par la photostimulation de cette couche et par le captage de la lumière émise lors de la photostimulation, caractérisé en ce que ce scanner comprend un appareil de photostimulation et de lecture comprenant:

(1) au moins un dispositif (4) pour produire un faisceau de rayonnement photostimulant et pour émettre ce faisceau sur la couche (5) contenant un luminophore;
(2) un faisceau de fibres optiques C (3) collectrices de lumière pour capter à travers leurs ouvertures d'entrée la lumière fluorescente émise par la photostimulation de la couche (5) de luminophore,

caractérisé en ce que pour accepter la lumière fluorescente, les ouvertures d'entrée des fibres optiques C (3) sont arrangées en une surface concave (12) par rapport à la couche (5) contenant un luminophore, et que les ouvertures d'entrée entourent symétriquement ou asymétriquement le faisceau de rayonnement photostimulant, et que les fibres optiques C, à leurs extrémités de sortie, sont couplées à un capteur photoélectronique transformant l'énergie lumineuse en énergie électrique.

14. Scanner selon la revendication 13, caractérisé en ce qu'il comprend un mécanisme de balayage X-Y au moyen duquel le faisceau de lumière photostimulante et la couche contenant un luminophore peuvent être mis en un mouvement X-Y relatif.

15. Scanner selon la revendication 14, caractérisé en ce que ce mouvement X-Y relatif est obtenu en déplaçant cet appareil, et par conséquent aussi son faisceau de lumière photostimulante, dans la direction X à une vitesse unidirectionnelle constante tandis que la plaque contenant un luminophore est en mouvement alternatif dans la direction Y.

16. Scanner selon la revendication 13, caractérisé en ce que ce scanner comprend (1) une feuille flexible à la couche de luminophore/liant montée sur un tambour rotatif qui est capable de tourner à une vitesse angulaire constante, et
(2) l'appareil de photostimulation et de lecture est arrangé d'une telle façon qu'on peut lui conférer, parallèlement à l'axe du tambour, un mouvement en ligne droite à une vitesse constante au moyen d'un mécanisme à vis-mère.

17. Scanner selon la revendication 13, caractérisé en ce que cet appareil de photostimulation et de lecture est lié à un moyen qui peut tourner à une vitesse angulaire constante et dans un plan parallèle à la couche contenant un luminophore, laquelle couche est portée par un moyen auquel on peut conférer un mouvement en ligne à une vitesse constante par rapport au faisceau de lumière de photostimulation.

18. Scanner selon l'une quelconque des revendications 13 à 17, caractérisé en ce que le plan concave dans lequel les fibres optiques C ont leurs ouvertures d'entrée a une telle courbure que toutes les fibres optiques C sont capables d'accepter la lumière fluorescente émise par un point de la couche contenant un luminophore au moment où cette couche est atteinte par un faisceau de lumière photostimulante.

19. Scanner selon la revendication 18, caractérisé en ce que le plan concave a la forme d'une partie d'une vraie sphère, ou a la forme d'une partie d'un corps ellipsoïdal, hyperboloïdal ou paraboloïdal.

20. Scanner selon l'une quelconque des revendications 13 à 19, caractérisé en ce que les ouvertures d'entrée des fibres optiques C sont arrangées dans un plan concave qui a une courbure telle que toutes les fibres optiques C sont capables d'accepter la lumière fluorescente émise par un point de la couche contenant un luminophore au moment où cette couche est atteinte par la lumière photostimulante émise par au moins une fibre optique E.

21. Dans une méthode de lecture de lumière fluorescente émise lors de la photostimulation d'une couche (5) contenant un luminophore qui a été atteinte sous forme d'image par un rayonnement pénétrant, l'utilisation d'un appareil comprenant:

(1) au moins un dispositif (4) pour produire un faisceau de rayonnement photostimulant et pour émettre ce faisceau sur la couche (5) contenant un luminophore;
(2) un faisceau de fibres optiques C (3) collectrices de lumière pour capter à travers leurs ouvertures d'entrée la lumière fluorescente émise par la photostimulation de la couche de luminophore (5),

caractérisé en ce que pour accepter la lumière fluorescente, les ouvertures d'entrée des fibres optiques C (3) sont arrangées dans une surface concave (12) par rapport à la couche contenant un luminophore, et que les ouvertures d'entrée entourent symétriquement ou asymétriquement le faisceau de rayonnement photostimulant, et caractérisé en ce que cette méthode contient la phase de lecture de cette lumière fluorescente à une durée de balayage des pixels qui est plus longue que la "durée de réponse" du luminophore présent dans cette couche contenant un luminophore, la "durée de balayage des pixels" étant le temps nécessaire pour balayer une longueur de 0,1 mm sur la couche contenant un luminophore, et la "durée de réponse" étant le temps de photostimulation nécessaire pour atteindre la moitié de l'intensité maximale de la lumière fluorescente émise dans un point photostimulé immobile de la couche contenant un luminophore.

FIG. 1

FIG. 2

FIG. 3

FIG. 4